(19) Europäisches Patentamt
European Patent Office
Office européen des brevets

(11) **EP 1 940 007 A1**

(12) **EUROPÄISCHE PATENTANMELDUNG**

(43) Veröffentlichungstag:
**02.07.2008 Patentblatt 2008/27**

(51) Int Cl.:
***H02K 3/28*** (2006.01)

(21) Anmeldenummer: 07120864.9

(22) Anmeldetag: **16.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **28.12.2006 DE 102006061699**

(71) Anmelder: **ROBERT BOSCH GMBH**
**70442 Stuttgart (DE)**

(72) Erfinder:
• **Roth, Karl-Juergen**
 **71701, Schwieberdingen (DE)**
• **Reutlinger, Kurt**
 **70174, Stuttgart (DE)**

(54) **Statorwicklungsanordnung für einen Synchronmotor mit reduziertem Bremsmoment im Fehlerfall**

(57) Die Erfindung betrifft eine m-phasige Statorwicklungsanordnung für einen Synchronmotor mit einem Stator (1) mit einer Anzahl k*m Statorspulen (3), die in mehrere Spulengruppen (5) aufgeteilt sind, wobei k einer natürlichen Zahl größer 1 entspricht, wobei eine Spulengruppe (5) eine oder mehrere in Reihe geschaltete Statorspulen (3) umfasst, wobei eine Anzahl von Spulengruppen (5) mit einer gemeinsamen Phase (L1, L2, ..., Lm) verbunden sind; wobei mindestens zwei der Spulengruppen (5) einer Phase über entsprechend verschiedene voneinander isolierte Teilsternpunkte (S1, S2, ..., Sn) mit jeweils einer entsprechenden Spulengruppe (5) einer anderen Phase verschaltet sind.

**FIG. 5**

EP 1 940 007 A1

**Beschreibung**

Die Erfindung betrifft eine Statorwicklungsanordnung für einen mehrphasigen Synchronmotor mit zwei oder mehr parallelen Spulengruppen je Phase.

Für hochwertige elektrische Antriebe werden in der Regel elektronisch kommutierte Synchronmotoren mit Permanentmagneten eingesetzt, da sie vorteilhafte Eigenschaften bezüglich Leistungsdichte, Wirkungsgrad und geeigneten Regelmöglichkeiten aufweisen. Solche permanenterregten Synchronmotoren weisen eine Statorwicklung auf, in der durch das rotierende Rotormagnetfeld eine Spannung induziert wird. Tritt innerhalb dieser Statorwicklung ein Isolationsfehler auf, kann sich unter Wirkung dieser induzierten Spannung abhängig von der Lage der Fehlerstelle ein mehr oder weniger starker Kurzschlussstrom ausbilden. Die Höhe dieses Kurzschlussstromes bestimmt ein aufgrund des Isolationsfehlers entstehendes Bremsmoment. Dieses Bremsmoment kann von außen nicht beeinflusst werden, da selbst bei einem Abschalten der Versorgungsspannung der Kurzschlusskreis innerhalb der Statorwicklung geschlossen ist.

Beim Einsatz derartiger Synchronmotoren bei sicherheitskritischen Antrieben, insbesondere für Anwendungen in Kraftfahrzeugen, wie z. B. elektrische Lenkhilfen, Steer-by-Wire und dergleichen darf es zu keinem unkontrollierbaren Bremsmoment im Fehlerfall, also bei Isolationsfehlern innerhalb der Statorwicklung, kommen.

Bislang wird für diese Anwendungen eine Möglichkeit zur Auftrennung des Sternpunktes, mit dem sämtliche Phasen der Statorwicklung verbunden sind, in Form eines mechanischen bzw. elektronischen Relais vorgeschlagen. Damit lässt sich für die meisten Fehlerfälle der Kurzschlusspfad unterbrechen und die Entstehung des Bremsmoments verhindern. Nachteilig hierbei ist jedoch der Bauraumbedarf für das Relais sowie der zusätzliche Kontaktier- und Ansteueraufwand. Beim Einsatz von mechanischen Relais kann sich die Störanfälligkeit des Gesamtsystems erhöhen. Des Weiteren lassen sich Wicklungskurzschlüsse innerhalb einer Phase nicht unterbrechen, so dass für diesen Fehlerfall eine Abschaltung des Bremsmomentes nicht möglich ist.

Es ist Aufgabe der vorliegenden Erfindung, eine Statorwicklungsanordnung für einen Synchronmotor zur Verfügung zu stellen, bei dem das bei Wicklungskurzschlüssen auftretende Bremsmoment reduziert werden kann, ohne ein die Störanfälligkeit des Gesamtsystems erhöhendes mechanisches bzw. elektronisches Relais zur Sternpunktauftrennung zu verwenden. Weiterhin soll das Motorverhalten im Normalbetrieb nicht beeinträchtigt werden.

Diese Aufgabe wird durch die Statorwicklungsanordnung für einen Synchronmotor gemäß Anspruch 1 gelöst.

Weitere vorteilhafte Ausgestaltungen der Erfindung sind in den abhängigen Ansprüchen angegeben.

Gemäß einem ersten Aspekt ist ein m-phasige Statorwicklungsanordnung mit einem Stator mit einer Anzahl k*m Statorspulen vorgesehen, wobei k einer natürlichen ganzen Zahl größer 1 entspricht. Die Statorspulen sind in mehrere Spulengruppen aufgeteilt, wobei eine Spulengruppe eine oder mehrere in Reihe geschaltete Statorspulen umfasst. Eine Anzahl von Spulengruppen sind zu einer gemeinsamen Phase zusammengefasst. Mindestens zwei der Spulengruppen einer Phase sind über entsprechend verschiedene voneinander isolierte Teilsternpunkte mit jeweils einer entsprechenden Spulengruppe einer anderen Phase verschaltet.

Eine Idee der erfindungsgemäßen Statorwicklungsanordnung besteht darin, dass bei Synchronmotoren mit mehreren parallelen Spulengruppen je Phase eine Mehrzahl oder alle dieser Spulengruppen in einem getrennten Sternpunkt mit einer oder mehreren entsprechenden Spulengruppen einer anderen Phase verschaltet sind. Dadurch kann erreicht werden, dass die parallelen Spulengruppen einer Phase nicht mehr in einem einzigen Sternpunkt zusammengefasst sind, wodurch ein Kurzschluss in einer Spulengruppe nicht wie bei einem gemeinsamen Sternpunkt zu einem hohen Fehlerstrom in allen übrigen nicht von dem Kurzschluss betroffenen Spulengruppen der gleichen Phase führen kann, da aufgrund der getrennten Sternpunkte nicht alle der Spulengruppen mit den Spulengruppen, in denen der Fehler aufgetreten ist, in Verbindung stehen. Stattdessen wird die Höhe des Fehlerstroms dadurch reduziert, dass die Spulengruppen bei Vorsehen mehrerer Sternpunkte im wesentlichen eine Reihenschaltung bilden, so dass der Fehlerstrom deutlich reduziert ist. Dadurch wirkt ein deutlich geringeres Bremsmoment als dies der Fall wäre, wenn alle Spulengruppen über einen gemeinsamen Sternpunkt miteinander in Verbindung stehen würden.

Gemäß einer Ausführungsform sind alle der Spulengruppen einer Phase über die entsprechend verschiedenen Teilsternpunkte mit jeweils einer entsprechenden Spulengruppen der übrigen Phasen verschaltet.

Weiterhin kann der Synchronmotor als 3-phasiger Synchronmotor mit 12 Statorspulen vorgesehen sein, wobei die Statorspulen in 6 Spulengruppen zu jeweils zwei Statorspulen aufgeteilt sind.

Vorzugsweise sind mindestens zwei Spulengruppen einer Phase mit entsprechenden Spulengruppen einer weiteren Phase über einen gemeinsamen Sternpunkt verbunden.

Bevorzugte Ausführungsformen der Erfindung werden nachfolgend anhand der beigefügten Zeichnungen näher erläutert. Es zeigen:

Figur 1 eine schematische Schnittansicht durch einen Synchronmotor mit zwölf Statorspulen und acht Rotorpolen;
Figur 2 eine schematische Darstellung einer Verschaltung einer 3-phasigen Statorwicklung eines Synchronmotors der Fig. 1;
Figur 3 eine schematische Darstellung der Verschaltung einer m-phasigen Statorwicklung über einen gemeinsamen Sternpunkt gemäß dem Stand der Technik;
Figur 4 eine Darstellung der Kurschlussstromverteilung eines Synchronmotors bei einer Verschaltung gemäß Figur 3;
Figur 5 eine schematische Darstellung der Verschaltung einer m-phasigen Statorwicklung über verschiedene Teilsternpunkte gemäß einer Ausführungsform der vorliegenden Erfindung;
Figur 6 eine Darstellung der Kurzschlussstromverteilung bei einem Synchronmotor mit einer Verschaltung gemäß Figur 5.

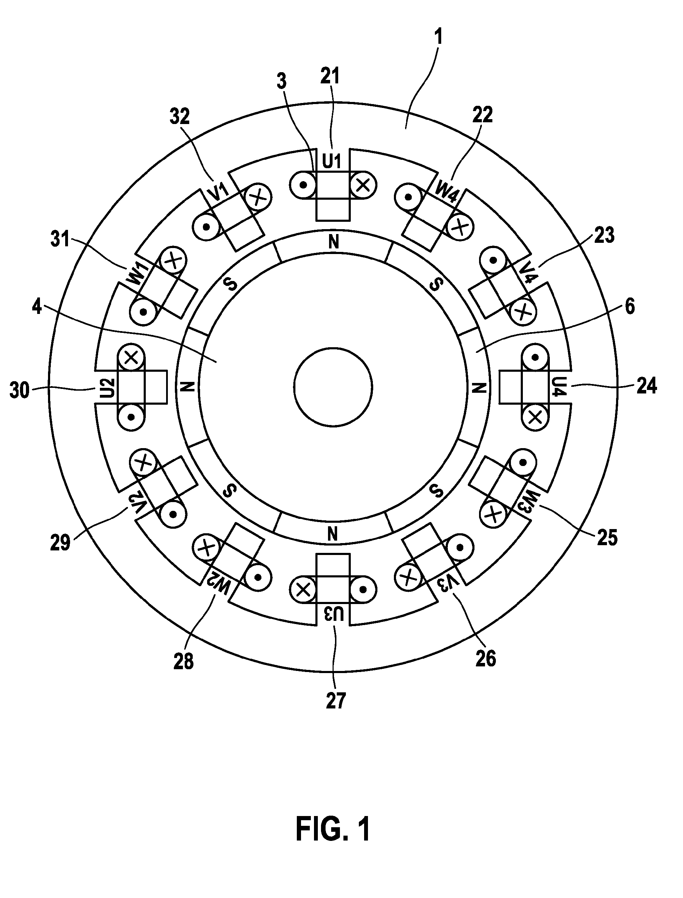

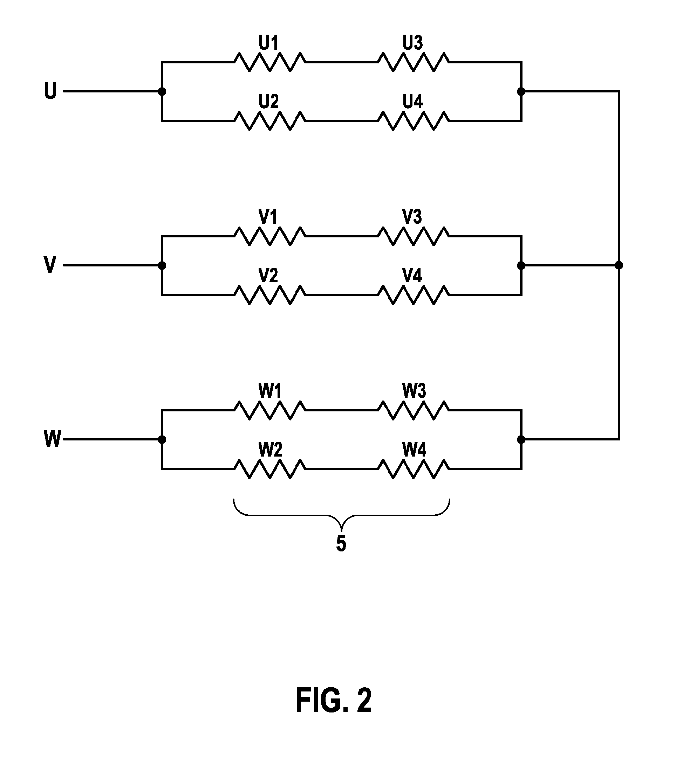

In Figur 1 ist eine Schnittansicht durch einen schematisch dargestellte Synchronmotor in einer 12/8-Konfiguration dargestellt. Der Synchronmotor weist zwölf in einem Stator 1 angeordnete Statorzähne 21 - 32 auf, die jeweils mit einer Statorspule 3 versehen sind. Im Inneren des Stators 1 befindet sich ein Rotor 4 des Synchronmotors, der mit acht Permanentmagneten 6 versehen ist, die so angeordnet sind, dass einander benachbarte Permanentmagnete 6 ein zueinander entgegen gesetzte Polung aufweisen. Wie in Fig. 2 gezeigt ist, sind bei dieser Ausführungsform die Statorspulen 3 miteinander so verschaltet, dass jeweils 4 Spulen U1-U4; V1-V4; W1-W4 zu einer Phase U, V, W zusammengefasst sind, die 2 parallele Spulengruppen mit jeweils 2 in Reihe geschalteten Statorspulen 3 umfasst. Das gezeigte Ausführungsbeispiel entspricht also einem dreiphasigen Synchronmotor.

Bei einer alternativen Ausführungsform einer Statorwicklungsanordnung ist der Synchronmotor als 3-phasiger Synchronmotor mit 18 Statorspulen 3 vorgesehen, wobei die Statorspulen 3 in 6 Spulengruppen 5 zu jeweils drei Statorspulen 3 aufgeteilt sind. Die Anzahl der Pole des Rotors kann von 8 verschieden sein, z.B. 10.

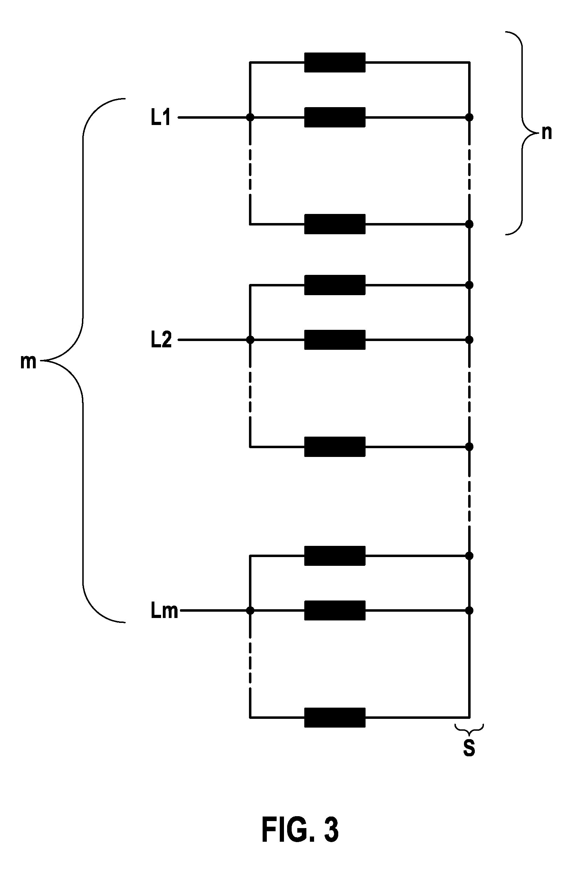

Fig. 3 zeigt eine herkömmliche Verschaltung der Statorspulen 3 einer allgemeinen Form eines Synchronmotors mit m Phasen L1, L2, ..., Lm und n parallelen Spulengruppen je Phase. Die Spulengruppen 5 enthalten eine oder mehrere in Reihe geschalteten Statorspulen 3 und sind aus Gründen der einfacheren Darstellung als ausgefüllte Rechtecke dargestellt. Die Verschaltung der Spulengruppen 3 entspricht einer Sternschaltung, d. h. ein Anschluss jeder der n Spulengruppen jeder Phase ist über einen gemeinsamen Sternpunkt S miteinander verbunden.

Bei einem solchen Synchronmotor werden im Falle eines Fehlers, z. B. bei einem möglichen Kurzschluss in einer Spulengruppe 3, alle parallel geschalteten Spulengruppen 5 einer Phase überbrückt und es entsteht ein entsprechend hohes Bremsmoment. Der Kurzschlussstrom $I_K$ fließt jedoch nur über Spulengruppen 5 der fehlerhaften Phase.

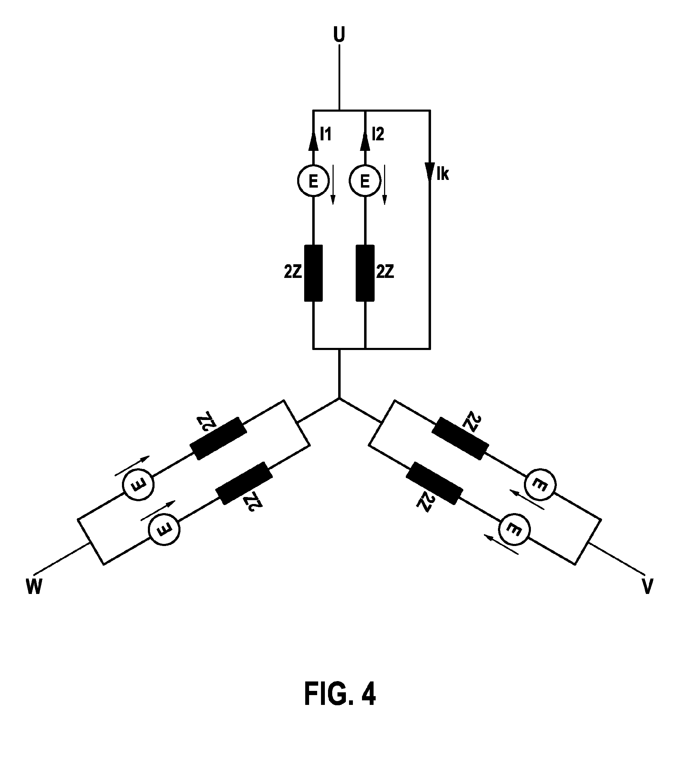

In Figur 4 ist für einen Fall eines herkömmlichen einem Aufbau der Fig. 3 entsprechenden Synchronmotors mit m = 3 Phasen und n = 2 parallelen Spulengruppen je Phase die Kurzschlussstromverteilung dargestellt, wenn eine vollständige Spulengruppe 5 kurzgeschlossen ist. Unabhängig von der Anzahl paralleler Spulengruppen 5 hängt die Höhe des Kurschlussstroms für eine bestimmte Rotordrehzahl lediglich von der Impedanz einer Phase Z und der induzierten Polradspannung E ab.

$$I_K = E/Z$$

Das dabei entstehende Bremsmoment berechnet sich in erster Näherung aus den Stromwärmeverlusten zu

$$M = \frac{I_K^2 \cdot \mathrm{Re}\{Z\}}{\omega_{mech}}$$

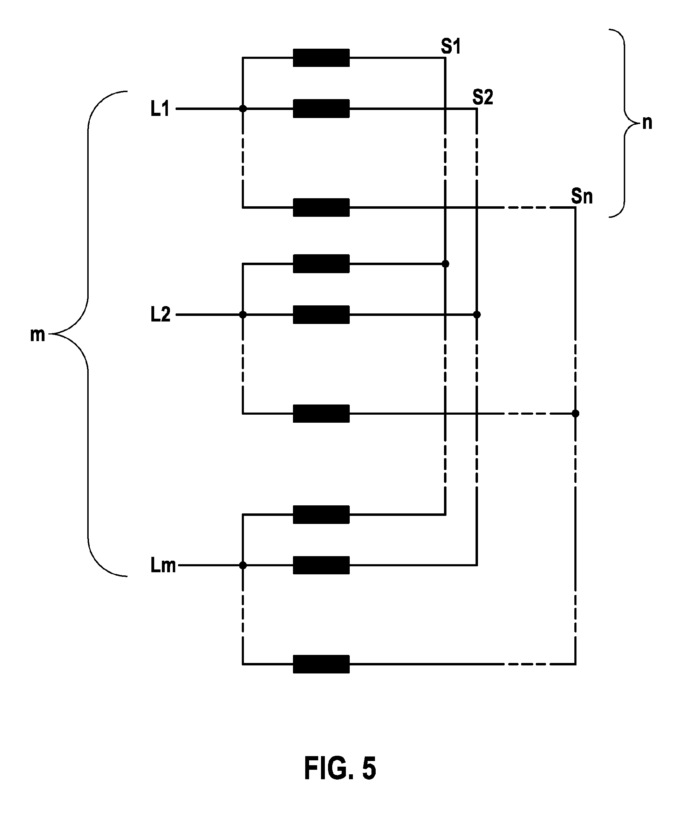

Für Antriebe, die auch im Fehlerfall nur sehr kleine Bremsmomente erzeugen dürfen, ist nun vorgesehen, den gemeinsamen Sternpunkt S in Teilsternpunkte S1, S2, ..., Sn aufzutrennen. Dies ist beispielsweise in Figur 5 analog zur Darstellung der Verschaltung der Statorspule 3 für den allgemeinen Synchronmotor der Figur 3 dargestellt. Um die maximale Wirkung zu erzielen, schaltet man alle n Spulengruppen einer Phase parallel und legt sie auf gegeneinander isolierte Teilsternpunkte S1, S2, .., Sn. Die maximale Anzahl der Teilsternpunkte ist bestimmt durch die Anzahl n der in einer Phase parallel geschalteten Spulengruppen 5.

Bei einem fehlerfreien Betrieb liegen die Teilsternpunkte ebenso wie bei der herkömmlichen Verschaltung, die in Figur 3 angegeben ist, auf dem gleichen Potential, und der Synchronmotor verhält sich in gleicher Weise wie ein Synchronmotor mit einem gemeinsamen Sternpunkt.

Die maximale Reduzierung des Bremsmomentes bei einem Fehlerfall lässt sich erreichen, wenn jede Spulengruppe einer Phase mit voneinander isolierten Teilsternpunkten S1, S2, ..., Sn verbunden ist. Es ist zur Reduzierung des Verdrahtungsaufwandes jedoch auch möglich, dass jeweils mehrere Spulengruppen 5 einer Phase über einen gemeinsamen Teilsternpunkt verbunden werden. So könnte z. B., wenn jede Phase vier Spulengruppen 5 umfasst, jeweils zwei der Spulengruppen 5 über einen gemeinsamen diesen zugeordneten Teilsternpunkt S1, S2, ..., Sn mit entsprechenden zwei Spulengruppen 5 der übrigen Phasen verbunden sein.

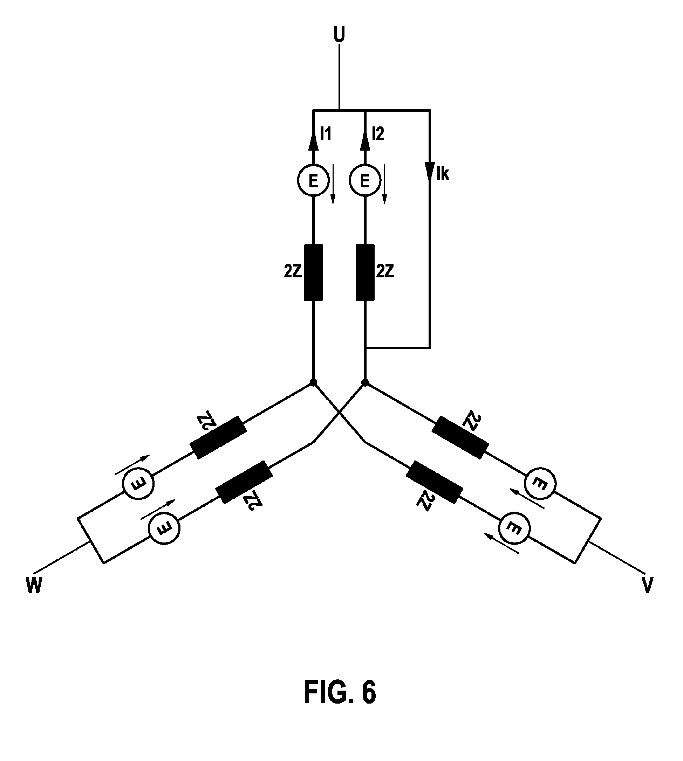

Im Fehlerfall, z. B. Kurzschluss einer Spulengruppe 5, der als zur Darstellung der Fig. 4 analoge Darstellung in Fig. 6 verdeutlicht ist, weichen die Potentiale der Teilsternpunkte S1, S2, ..., Sn erheblich voneinander ab und es kommt zu Ausgleichsströmen auch über die nicht vom Kurzschluss betroffenen Phasen. Der Kurzschlussstrom breitet sich jetzt über sämtliche Spulengruppen 5 aller m Phasen aus, ist jedoch aufgrund der durch die Reihenschaltung der Spulengruppen 5 der Phasen in seiner Amplitude deutlich geringer. Dadurch wird ein geringeres Bremsmoment hervorgerufen.

Als Beispiel ist nun analog zu der Darstellung der Fig. 4 die Verschaltung von Spulengruppen eines Synchronmotors mit m=3 Phasen und n=2 parallelen Spulengruppen je Phase sowie die Kurzschlussstromverteilung bei einem Kurzschluss einer Spulengruppe 5 in dem Fall von getrennten Teilsternpunkten dargestellt. In diesem Fall ergibt sich gegenüber der Wicklung mit gemeinsamem Sternpunkt eine deutliche Reduzierung des Kurzschlussstromes zu

$$I_K = \frac{3}{4}\, E/Z$$

und damit auch ein deutlich reduziertes Bremsmoment. Das Auftrennen des Sternpunktes in mehrere Teilsternpunkte S1, S2, ..., Sn ist für elektronisch kommutierte Synchronmotoren beliebiger Phasenzahl und beliebiger Anzahl paralleler Spulengruppen 5 anwendbar. Eine Reduzierung der Bremsmomente in einem Fehlerfall wird dabei bei nahezu allen in der Wicklungsisolation auftretenden Fehlern erreicht.

Ein derartiger Synchronmotor hat ein deutlich reduziertes Bremsmoment im Fehlerfall auch im nicht angesteuerten Fall, so dass auf zusätzliche Maßnahmen wie das Vorsehen von Relais zur Auftrennung eines gemeinsamen Sternpunktes, wenn ein Fehler erkannt wird, verzichtet werden kann. Aus diesem Grunde eignen sich derartige Synchronmotoren für den Einsatz in Lenksystemen für Kraftfahrzeuge.

**Patentansprüche**

1. m-phasige Statorwicklungsanordnung für einen Synchronmotor mit einem Stator (1) mit einer Anzahl k*m Statorspulen (3), die in mehrere Spulengruppen (5) aufgeteilt sind, wobei k einer natürlichen Zahl größer 1 entspricht, wobei eine Spulengruppe (5) eine oder mehrere in Reihe geschaltete Statorspulen (3) umfasst,
wobei eine Anzahl von Spulengruppen (5) mit einer gemeinsamen Phase (L1, L2, ..., Lm) verbunden sind;
**dadurch gekennzeichnet, dass**
mindestens zwei der Spulengruppen (5) einer Phase über entsprechend verschiedene voneinander isolierte Teilsternpunkte (S1, S2, ..., Sn) mit jeweils einer entsprechenden Spulengruppe (5) einer anderen Phase verschaltet sind.

2. Statorwicklungsanordnung nach Anspruch 1, wobei alle der Spulengruppen (5) einer Phase (L1, L2, ...,

Lm) über die entsprechend verschiedenen Teilsternpunkte (S1, S2, ..., Sn) mit jeweils einer entsprechenden Spulengruppen (5) einer anderen Phase (L1, L2, ..., Lm) verschaltet sind.

3. Statorwicklungsanordnung nach Anspruch 1 oder 2, wobei der Synchronmotor als 3-phasiger Synchronmotor mit 12 Statorspulen (3) vorgesehen ist, wobei die Statorspulen (3) in 6 Spulengruppen (5) zu jeweils zwei Statorspulen (3) aufgeteilt sind.

4. Statorwicklungsanordnung nach Anspruch 1 oder 2, wobei der Synchronmotor als 3-phasiger Synchronmotor mit 18 Statorspulen (3) vorgesehen ist, wobei die Statorspulen (3) in 6 Spulengruppen (5) zu jeweils drei Statorspulen (3) aufgeteilt sind.

5. Statorwicklungsanordnung nach einem der Ansprüche 1 bis 4, wobei mindestens zwei Spulengruppen (5) einer Phase (L1, L2, ..., Lm) mit entsprechenden Spulengruppen (5) einer weiteren Phase (L1, L2, ..., Lm) über einen gemeinsamen Sternpunkt verbunden sind.

6. Verwendung eines Synchronmotors mit einer Statorwicklungsanordnung nach einem der Ansprüche 1 bis 5 in einem Lenksystem eines Kraftfahrzeugs.

**FIG. 1**

**FIG. 2**

FIG. 3

FIG. 4

**FIG. 5**

FIG. 6

**Europäisches Patentamt**

# EUROPÄISCHER RECHERCHENBERICHT

Nummer der Anmeldung

EP 07 12 0864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 587 315 A (SIEMENS AG) 1. April 1981 (1981-04-01) * Seite 8, Zeile 60 - Seite 9, Zeile 2; Abbildungen 4,5 * ----- | 1-6 | INV. H02K3/28 |
| X | US 4 284 919 A (AUINGER HERBERT) 18. August 1981 (1981-08-18) * Spalte 6, Zeilen 18-60; Abbildungen 1,10,13 * ----- | 1-6 | |
| A | DE 197 57 136 A1 (TEMIC AUTO ELECTR MOTORS GMBH [DE]) 24. Juni 1999 (1999-06-24) * Spalte 2, Zeilen 27-39; Abbildung 8 * ----- | 1-6 | |
| A | WO 02/09257 A (BOSCH GMBH ROBERT [DE]; BLASCO REMACHA CARLOS [ES]) 31. Januar 2002 (2002-01-31) * Zusammenfassung; Abbildung 1 * ----- | 1-6 | |
| A | CHAN C C: "A NOVEL HIGH POWER DENSITY PERMANENT MAGNET VARIABLE-SPEED MOTOR" IEEE TRANSACTIONS ON ENERGY CONVERSION, IEEE SERVICE CENTER, PISCATAWAY, NJ, US, Bd. 8, Nr. 2, 1. Juni 1993 (1993-06-01), Seiten 297-303, XP000384981 ISSN: 0885-8969 * Abbildung 2 * ----- | 1-6 | RECHERCHIERTE SACHGEBIETE (IPC) H02K |

Der vorliegende Recherchenbericht wurde für alle Patentansprüche erstellt

| Recherchenort | Abschlußdatum der Recherche | Prüfer |
|---|---|---|
| München | 15. April 2008 | Kampka, Achim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

# EP 1 940 007 A1

**ANHANG ZUM EUROPÄISCHEN RECHERCHENBERICHT**
**ÜBER DIE EUROPÄISCHE PATENTANMELDUNG NR.**

EP 07 12 0864

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2008

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| GB | 1587315 | A | 01-04-1981 | CH | 621019 | A5 | 31-12-1980 |
| | | | | DE | 2629642 | A1 | 05-01-1978 |
| | | | | ES | 460279 | A1 | 16-08-1978 |
| | | | | FR | 2357096 | A1 | 27-01-1978 |
| | | | | JP | 1032742 | B | 10-07-1989 |
| | | | | JP | 1558533 | C | 16-05-1990 |
| | | | | JP | 53025810 | A | 10-03-1978 |
| | | | | SE | 426431 | B | 17-01-1983 |
| | | | | SE | 7706867 | A | 02-01-1978 |
| | | | | US | 4144470 | A | 13-03-1979 |
| US | 4284919 | A | 18-08-1981 | DE | 2842286 | A1 | 03-04-1980 |
| | | | | JP | 55049960 | A | 11-04-1980 |
| DE | 19757136 | A1 | 24-06-1999 | BR | 9813725 | A | 10-10-2000 |
| | | | | CA | 2315755 | A1 | 01-07-1999 |
| | | | | CN | 1282457 | A | 31-01-2001 |
| | | | | WO | 9933157 | A1 | 01-07-1999 |
| | | | | EP | 1040550 | A1 | 04-10-2000 |
| | | | | ES | 2216347 | T3 | 16-10-2004 |
| | | | | JP | 2001527376 | T | 25-12-2001 |
| | | | | US | 6472783 | B1 | 29-10-2002 |
| WO | 0209257 | A | 31-01-2002 | DE | 10036289 | A1 | 07-02-2002 |
| | | | | EP | 1201019 | A1 | 02-05-2002 |
| | | | | ES | 2236269 | T3 | 16-07-2005 |
| | | | | JP | 2004505589 | T | 19-02-2004 |
| | | | | TW | 552763 | B | 11-09-2003 |
| | | | | US | 2002153797 | A1 | 24-10-2002 |

EPO FORM P0461

Für nähere Einzelheiten zu diesem Anhang : siehe Amtsblatt des Europäischen Patentamts, Nr.12/82

12